# EUROPEAN PATENT APPLICATION

(11) **EP 4 685 740 A1**
(43) Date of publication of application: **28.01.2026**
(21) Application number: 24190649.4
(22) Date of filing: 24.07.2024
(51) Int. Cl.: G06T 7/11, G06V 10/82

(54) **FLEXIBLE SEGMENTATION OF IMAGES**

(71) Applicant: Robert Bosch GmbH, 70442 Stuttgart (DE)
(72) Inventor: Huang, Haiwen, 72074 Tübingen (DE); Zhang, Dan, 71229 Leonberg (DE)

(57) **Abstract**

A method (100) for determining a segmentation (7) of an input image (1), said input image (1) comprising pixels carrying pixel values, said segmentation (7) assigning, to each pixel of the input image (1), a class of an entity that has given rise to the pixel value of this pixel, the method comprising the steps of:
• providing (110) the input image (1) to a vision processing network (2a) that outputs masks (3) designating sets of pixels belonging to different object types, as well as an associated weight matrix (4) that is indicative of distinguishing features characterizing entities of different types in the input image (1);
• transforming (120), by an encoder network (5), said weight matrix (4) in combination with the input image (1) into at least one mask representation (6) in a latent space that is a notion of assignments of classes to masks;
• processing (130) the input image (1), together with said mask representation (6), by a vision processing network (2b, 2c), into a refinement (3*, 3**) for the masks (3) and a refined weight matrix (4*, 4**);
• transforming (140), by the encoder network (5), the refined weight matrix (4*, 4**) in combination with the input image (1) into at least one refined mask representation (6*, 6**) in the latent space; and
• computing (150) the sought segmentation (7) from the masks (3) and the at least one mask representation (6) in the latent space, or from further refinements (3*, 3**; 6*, 6**) thereof obtained by further passes through a vision processing network (2b, 2c) and the encoder network (5).

## Description

The present invention relates to the segmentation of images that may, inter alia, be used to process images for the purpose of automated driving of vehicles or robots.

### Background

When a vehicle or robot is maneuvered in an at least partially automated manner on corporate premises or in public road traffic, it is necessary to constantly monitor the environment of the vehicle or robot for any objects that might be relevant for planning the future behavior of the vehicle or robot. To this end, images of this environment are frequently processed into semantic segmentations that assign, to each image pixel, a class of an object to which this particular pixel belongs.

In simple applications, the set of available classes is fixed in advance. That is, each pixel can only be attributed to a class selected from a fixed catalogue. However, in automated driving applications, the monitoring of the environment will also have to cope with unexpected situations comprising objects that do not fit into a previously fixed catalogue of classes. It is therefore desirable to make the segmentation of images more flexible, and in particular to perform an "open-vocabulary" segmentation that is not limited to such a catalogue.

### Disclosure of the invention

The invention provides a method for determining a segmentation of an input image. The input image comprises pixels carrying pixel values. The segmentation assigns, to each pixel of the input image, a class of an entity that has given rise to the pixel value of this pixel. Herein, an entity may, in particular, be an object (such as a car, a pedestrian or a tree), but it may also be a non-object entity, such as sky or road. Such non-object entities are sometimes called "stuffs" in the field of computer vision. A set of available classes need not be fixed in advance; that is, the segmentation is an open-vocabulary segmentation at least in this sense even if no textual meaning is attributed to any of the classes. In particular, the image may be any array of pixels whose pixel values represent values of measurement data that correspond to points in space indicated by the positions of the respective pixels in the array. For example, the image may be a still image or a video image record by a camera, a radar image, a lidar image, an ultrasonic image, a thermal image, or any multimodal combination of measurement data.

In the course of the method, the input image is provided to a vision processing network. This vision processing network outputs pixel masks. These pixel masks designate sets of pixels belonging to different object types, i.e., there may be masks for abstract different object types A, B, C, D, ..., without any further information what exactly constitutes an object of the respective type. In particular, the number of different masks that arises from the processing need not be fixed in advance. If the vision processing network finds that there are N classes worth distinguishing from one another, it will output N masks. The vision processing network also outputs an associated weight matrix that is indicative of distinguishing features characterizing entities of different types in the input image. Such distinguishing features may, in particular, relate to the presence, and in particular to the position, of particular shapes or other discriminative parts by which entities of different types can be identified.

In particular, the weight matrix, when applied together with a mask, may allow for a softening of the mask that is typically binary. The weighting in the weight matrix may be tailored to a subsequent processing step, such as the use of an encoder network or other vision processing network. That is, features by which a downstream network may identify entities of different types more easily may be weighted higher.

The weight matrix need not be directly interpretable. However, it may represent semantic interdependencies between image features and objects of different types. For example, some image features may have a particular meaning, or may otherwise be of particular importance, in context with other features.

An encoder network transforms the weight matrix, in combination with the input image, into at least one mask representation in a latent space. This mask representation is a notion of assignments of classes to masks. The input image is processed, together with this representation, by a vision processing network into a refinement for the masks on the one hand, and a refined weight matrix on the other hand. In particular, the vision processing network may be of the same architecture as the vision processing network that has provided the initial estimate of the masks and of the weight matrix. This means that this instance of the vision processing network that is used first is also of an architecture that is configured to accept a mask representation as input. But for the providing of the initial estimate of the masks and of the weight matrix, an arbitrary initialization (e.g., a random initialization) of the mask representation may be used. That is, the mask representation may be regarded as a "learnable query" that is provided to the vision processing network in addition to the input image in order to extract information from this input image, but is at the same time learned (refined) from one iteration to the next.

The encoder network then transforms the refined weight matrix, in combination with the input image, into at least one refined mask representation in the latent space. At this point, the overall available processing result is of the same type as after the first use of the encoder network: there are masks on the one hand, and mask embeddings on the other hand. But both have been refined. This process may continue for an arbitrary number of further iterations until it is decided, by means of any suitable termination criterion, to compute the final sought segmentation.

That is, the final sought segmentation is computed from the initial masks and the at least one initial mask representation in the latent space, or from any further refinements thereof obtained by further passes through a vision processing network and the encoder network.

The representation may have a lower dimensionality than the masks themselves, but it may also be of the same dimensionality in order to facilitate the assembly of the final segmentation.

In one example, a mask on the one hand and a corresponding mask representation on the other hand may be brought together by means of computing their dot product (i.e., scalar product). This yields one single number, a "mask logit", that can be assigned to every pixel designated by the respective mask. The masks may overlap, i.e., one and the same pixel may be designated by multiple masks. The ambiguity may be resolved by performing pixel-wise argmax, i.e., determining, for each pixel, the mask with the highest mask logit. The pixel may then be assigned the class corresponding to this mask.

That is, in a particularly advantageous embodiment, computing the sought segmentation comprises computing a dot product between at least one mask and at least one mask representation.

It was found that, by computing and refining the weight matrix from one iteration to the next, this "query" that is provided to the vision processing network is made dependent on the actual input image. This provides a much better flexibility compared to approaches that also use such queries, but limit them to a fixed number, or even to a fixed set. This in turn improves the accuracy of the finally obtained segmentation both on classes that were seen during training of the one or more vision processing networks and on unseen classes that were not part of the training. Instance-wise queries as they are used in the present method allow the vision processing network to adapt to each input image for the queries. This can significantly improve the segmentation performance, especially for open-vocabulary scenarios where the test dataset can be different from the training dataset and a fixed set of queries can be suboptimal to use.

Moreover, the overall task of obtaining the final segmentation is made easier by splitting it up into multiple iterations. In a simple analogy, it is much easier to go from one story of a building up to the next higher one by walking up a staircase that splits the task into many steps than it is to directly jump to the next higher story.

The training of a network arrangement for performing the method is further facilitated by employing the encoder network. The encoder network is not tied to this particular purpose. Rather, a generically trained encoder network may be used as it is, and while the one or more vision processing networks are trained, parameters that characterize the behavior of the encoder network may remain frozen.

In a particularly advantageous embodiment, an image encoder network that has been trained together with a text encoder network to estimate best pairs between image inputs and text inputs is chosen as the encoder network. For example, the image encoder network of the Contrastive Language-Image Pre-training, CLIP, network may be chosen as the encoder network. Having an encoder network that is configured to process images, but has been trained together with a text encoder network, transfers the semantic knowledge learned from correlations and links between text features on the one hand, and image features on the other hand, to the task of determining mask representations. For example, the CLIP network has been trained with very many combinations of text and images, and in this process, it has learned much about semantic logic. If the weight matrix is inputted to the CLIP network together with the input image, the CLIP network will apply this semantic logic when determining the next iteration of the mask embedding. Moreover, using the encoder network again in each iteration causes the alignment between text features and image features to be preserved across iterations. That is, the alignment does not "drift away" by multiple successive applications of the one or more vision processing networks.

The use of an encoder network that is aligned with a text encoder network brings about the further advantage that some notion of meanings of classes can be inferred. This facilitates the further interpretation of the finally obtained segmentation map even in a case where some of the classes are unseen during training. Therefore, in a further particularly advantageous embodiment, using the text encoder network, a text representation in the latent space is computed from a candidate class name. This text representation is compared to the mask representation in the latent space. From the result of this comparison, an assignment of the candidate class name to a matching mask is determined. Even though it is not possible to directly derive a full textual definition of the class, the assignment of a class name in this manner is very helpful for the understanding of the segmentation map.

In a further particularly advantageous embodiment, the at least one vision processing network is a vision transformer network that computes attention relationships between parts of its input. These attention relationships preserves much of the logic according to which the input images has been composed. In particular, the input images that accrue in automated driving tasks will not be random compositions of objects. Rather, they will be images of sceneries in the environment of a vehicle or robot that follow at least some logic, i.e., obey basic physical laws (e.g., that there is gravity and objects do not just float freely in space) and basic traffic rules. Another advantage of transformer networks is that they can easily accept further inputs on top of the image, i.e., the mask representation.

In particular, the weight matrix may be computed from the attention relationships. For example, an attention bias that is outputted by the vision transformer network may be directly used.

In a further particularly advantageous embodiment, the encoder network is chosen to be a further transformer network that computes attention relationships between parts of its input. The weight matrix may then be directly applied to one or more attention layers of this further transformer network. In particular, an attention bias computed by the vision transformer network may be applied to the at least one attention layer of the further transformer network.

Any refinements for the masks may advantageously be computed as offsets to be applied to the initially computed mask. In this manner, the sought quantities are smaller than if a whole new mask is to be determined.

Each instance of the vision processing network may be used and trained separately. This provides for maximum flexibility, at the price of increasing the total size of the network arrangement. If the size of the network is to be reduced, in a further particularly advantageous embodiment, one and the same vision processing network may be used for the initial computation of masks and the weight matrix on the one hand, and refinements thereof on the other hand. The function that the vision processing network is to perform upon each use may then controlled by an extra input to this vision processing network. For example, the vision processing network may receive a stage indicator s as an additional input.

The input image may advantageously be an image that has been acquired by at least one sensor. From the segmentation obtained out of this input image as discussed above, an actuation signal may then be computed. A vehicle, a robot, a driving assistance system, a quality inspection system, a surveillance system, and/or a medical imaging system, may then be actuated with the actuation signal. By virtue of the improved accuracy of the segmentation even in a case where there are objects of classes unseen during training, the probability that the reaction performed by the respective actuated system in response to the actuation signal is appropriate in the situation characterized by the input image is increased. In particular, unexpected situations that have a higher tendency to give rise to the appearance of unseen classes may be handled better.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

### Description of the Figures

In the following, the invention is illustrated using Figures without any intention to limit the scope of the invention. The Figures show:
Figure 1 Exemplary embodiment of the method 100 for determining a segmentation 7 of an input image 1;
Figure 2 Exemplary processing of an input image 1 in multiple instances 2a-2c of vision transformers;
Figure 3 Exemplary interplay between a mask 3 and a corresponding mask embedding 6 in the computation of the segmentation 7;
Figure 4: Exemplary assignment of class names 9, 9' to masks 3, 3'.

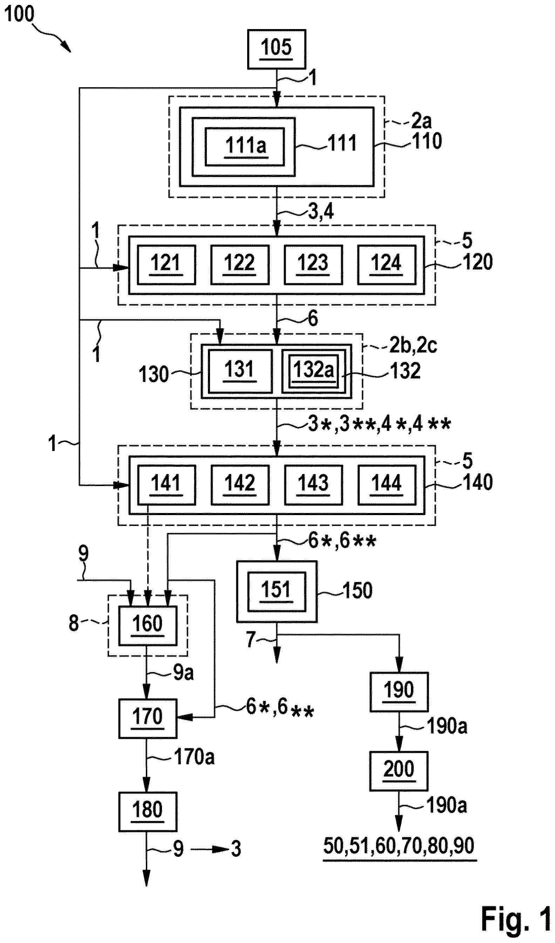

Figure 1 is a schematic flow chart of an exemplary embodiment of the method 100 for determining a segmentation 7 of an input image 1. The input image 1 comprises pixels carrying pixel values. The segmentation 7 assigns, to each pixel of the input image 1, a class of an entity that has given rise to the pixel value of this pixel.

According to block 105, the input image 1 may be chosen to have been acquired by at least one sensor.

In step 110, the input image 1 is provided to a vision processing network 2a. The vision processing network 2a then outputs masks 3 designating sets of pixels belonging to different object types, as well as an associated weight matrix 4. This weight matrix 4 is indicative of distinguishing features characterizing entities of different types in the input image 1.

In step 120, an encoder network 5 transforms the weight matrix 4 in combination with the input image 1 into at least one mask representation 6 in a latent space that is a notion of assignments of classes to masks.

In step 130, the input image 1, together with the mask representation 6 is processed by a vision processing network 2b, 2c into a refinement 3*, 3** for the masks 3 and a refined weight matrix 4*, 4**.

In step 140, the encoder network 5 transforms the refined weight matrix 4*, 4** in combination with the input image 1 into at least one refined mask representation 6*, 6** in the latent space.

In step 150, the sought segmentation 7 is computed from the masks 3 and the at least one mask representation 6 in the latent space, or from further refinements 3*, 3**; 6*, 6** thereof obtained by further passes through a vision processing network 2b, 2c and the encoder network 5.

According to block 111, 132, at least one vision processing network 2a-2c may be a vision transformer network that computes attention relationships between parts of its input.

According to block 111 a, 132a, the weight matrix 4, 4*, 4** may be computed 111a, 132a from the attention relationships.

According to block 121, 141, an image encoder network that has been trained together with a text encoder network 8 to estimate best pairs between image inputs and text inputs may be chosen as the encoder network 5.

According to block 122, 142, the encoder network 5 may be chosen to be a further transformer network that computes attention relationships between parts of its input.

According to block 123, 143, an attention bias computed by the vision transformer network 2a may be applied to at least one attention layer of the further transformer network.

According to block 124, 144, the image encoder network of the Contrastive Language-Image Pre-training, CLIP, network may be chosen as the encoder network 5.

According to block 131, refinements 3*, 3** for the masks 3 may be computed as offsets to be applied to the initially computed mask 3.

According to block 151, computing the sought segmentation may comprise computing a dot product between at least one mask 3, 3*, 3** and at least one mask representation 6, 6*, 6**.

In addition to the computation of the mere sought segmentation 7, class names for the masks 3 may be established. To this end, in the example shown in Figure 1, in step 160, using the text encoder network 8 with which the image encoder network as encoder network 5 has been trained, from a candidate class name 9, a text representation 9a in the latent space is computed. In step 170, this text representation 9a is compared to the mask representation 6, 6*, 6** in the latent space, to yield a comparison result 170a. In step 180, from this comparison result 170a, an assignment of the candidate class name 9 to a matching mask 3 is determined. For example, if the representation of the candidate class name 9 "car" is very close in the latent space to the mask representation 6, 6*, 6**, then the chance is high that the mask relates to cars.

The finally determined segmentation 7 may be used in any suitable manner. In the example shown in Figure 1, in step 190, an actuation signal 190a is computed from the segmentation 7. In step 200, a vehicle 50, a driving assistance system 51, a robot 60, a quality inspection system 70, a surveillance system 80, and/or a medical imaging system 90, is actuated with the actuation signal 190a.

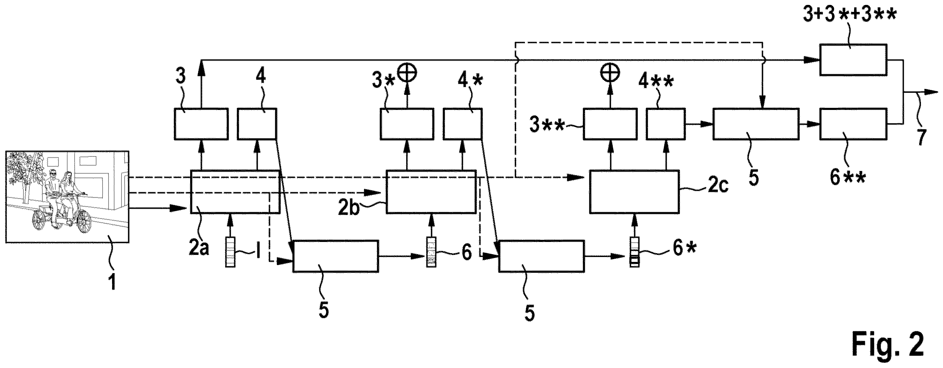

Figure 2 illustrates in one example how an input image may be processed by multiple vision processing network instances 2a-2c into a segmentation 7.

All vision processing network instances 2a-2c accept mask embeddings 6, 6*, 6** as inputs on top of the input image 1. The first vision processing network 2a that processes the input image gets a random initialization I as input instead of a mask embedding 6, 6*, 6**. It produces mask predictions 3, as well as an attention bias as weight matrix 4. This weight matrix 4, together with the input image 1, is processed into mask embeddings 6 by an encoder network 5, here: an image encoder of the CLIP network.

The input image 1 is then fed into the next vision processing network instance 2b, together with the mask embeddings 6. This vision processing network instance 2b produces a refinement 3* for the masks (here: in the form of offsets that are to be added to the original masks 3), as well as a new attention bias as new weight matrix 4*. This refined weight matrix 4* is then again processed, together with the input image 1, by the encoder 5, into refined mask embeddings 6*.

In the example shown in Figure 2, there is one further iteration with a third vision processing network instance 2c. Out of the input image 1 in combination with the refined mask embeddings 6*, this third vision processing network instance 2c produces a second refinement 3** for the masks (again in the form of an additive offset) and yet another attention bias as new weight matrix 4**. This new weight matrix 4** is processed, in combination with the input image 1, into final mask embeddings 6** by the encoder 5.

The final segmentation 7 is computed from the final masks, which are the sum of the original masks 3, the additive offsets 3* and 3**, in combination with the final mask embeddings 6**.

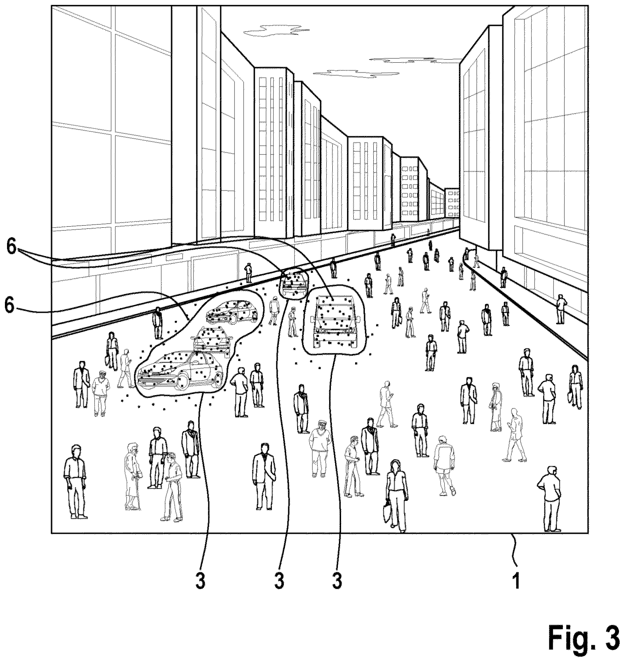

Figure 3 illustrates the interplay of a mask 3 and a mask embedding 6 on one exemplary input image 1 that shows a crowded street scene. Into the input image, some areas that belong, according to a mask 3, to the class "vehicle" have been drawn as contours, and the corresponding mask embedding 6 has been drawn as dots, wherein the density of the dots corresponds to the value of the mask embedding 6. Because the scene is crowded and comprises many other objects, such as pedestrians, close to the vehicles, the mask 3 can give only a rough outline of the vehicles. The mask embedding 6, which is derived from the weight matrix 4 (such as an attention bias), allows for a more fine-grained distinction between vehicles and other nearby objects. When a dot-product of the mask 3 with the mask embedding 6 is computed, only those pixels that are designated by the mask 3 and at the same time have high values in the mask embedding 6 will be designated as belonging to the class "vehicle". In particular, because the street scene shown in Figure 3 is crowded, the mask 3 for the class "vehicle" may very well overlap with masks for classes of nearby objects, such as "road surface" or "pedestrian".

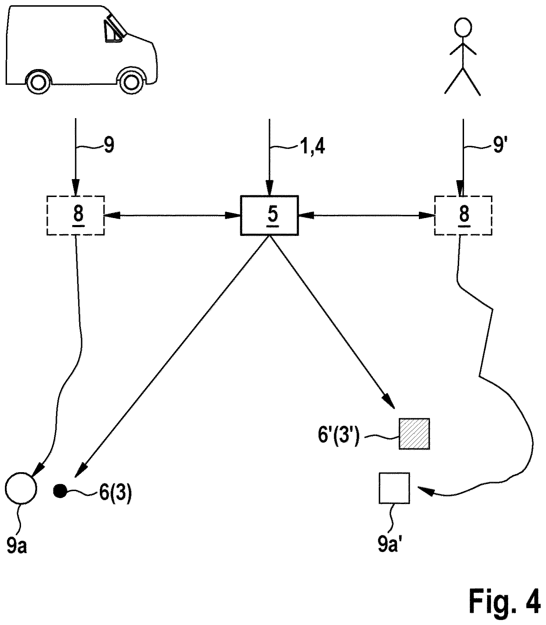

Figure 4 illustrates how class names may be assigned to masks in an open-vocabulary setting. An attention bias as weight matrix 4 is transformed, together with the input image 1, by the encoder 5, into mask representations that comprise, in the example shown in Figure 4, a first part 6(3) relating to a first mask 3 and a second part 6'(3') relating to a second mask 3'.

The encoder network 5 has, as part of the CLIP network, been trained in tandem with a text encoder network 8. When a first class name 9 "car" is inputted into this text encoder network 8, this is transformed to a first representation 9a in the latent space that is close to the mask representation 6(3) relating to the first mask 3. This yields the information that the first mask 3 most likely relates to the class "car".

Likewise, when a second class name 9' "pedestrian" is inputted into the text encoder network 8, this is transformed to a second representation 9a' in the latent space that is close to the mask representation 6'(3') relating to the second mask 3'.This yields the information that the second mask 3' most likely relates to the class "pedestrian".

## Claims

1. A method (100) for determining a segmentation (7) of an input image (1), said input image (1) comprising pixels carrying pixel values, said segmentation (7) assigning, to each pixel of the input image (1), a class of an entity that has given rise to the pixel value of this pixel, the method comprising the steps of:
• providing (110) the input image (1) to a vision processing network (2a) that outputs masks (3) designating sets of pixels belonging to different object types, as well as an associated weight matrix (4) that is indicative of distinguishing features characterizing entities of different types in the input image (1);
• transforming (120), by an encoder network (5), said weight matrix (4) in combination with the input image (1) into at least one mask representation (6) in a latent space that is a notion of assignments of classes to masks;
• processing (130) the input image (1), together with said mask representation (6), by a vision processing network (2b, 2c), into a refinement (3*, 3**) for the masks (3) and a refined weight matrix (4*, 4**);
• transforming (140), by the encoder network (5), the refined weight matrix (4*, 4**) in combination with the input image (1) into at least one refined mask representation (6*, 6**) in the latent space; and
• computing (150) the sought segmentation (7) from the masks (3) and the at least one mask representation (6) in the latent space, or from further refinements (3*, 3**; 6*, 6**) thereof obtained by further passes through a vision processing network (2b, 2c) and the encoder network (5).

2. The method (100) of claim 1, wherein at least one vision processing network (2a-2c) is a vision transformer network that computes attention relationships between parts of its input (111, 132).

3. The method (100) of claim 2, wherein the weight matrix (4, 4*, 4**) is computed (111a, 132a) from the attention relationships.

4. The method (100) of any one of claims 1 to 3, wherein an image encoder network that has been trained together with a text encoder network (8) to estimate best pairs between image inputs and text inputs is chosen (121, 141) as the encoder network (5).

5. The method (100) of claim 4, further comprising:
• computing (160), using the text encoder network (8), from a candidate class name (9), a text representation (9a) in the latent space;
• comparing (170) this text representation (9a) to the mask representation (6, 6*, 6**) in the latent space; and
• determining (180), from the result (170a) of this comparison, an assignment of the candidate class name (9) to a matching mask (3).

6. The method (100) of claim 4 or 5, wherein the encoder network (5) is chosen (122, 142) to be a further transformer network that computes attention relationships between parts of its input.

7. The method (100) of claim 3 and 6, wherein an attention bias computed by the vision transformer network (2a) is applied (123, 143) to at least one attention layer of the further transformer network.

8. The method (100) of any one of claims 4 to 7, wherein the image encoder network of the Contrastive Language-Image Pre-training, CLIP, network is chosen (124, 144) as the encoder network (5).

9. The method (100) of any one of claims 1 to 8, wherein refinements (3*, 3**) for the masks (3) are computed (131) as offsets to be applied to the initially computed mask (3).

10. The method (100) of any one of claims 1 to 9, wherein computing the sought segmentation (7) comprises computing (151) a dot product between at least one mask (3, 3*, 3**) and at least one mask representation (6, 6*, 6**).

11. The method (100) of any one of claims 1 to 10, wherein
• one and the same vision processing network (2a) is used for the initial computation of masks (3) and the weight matrix (4) on the one hand, and refinements (3*, 3**; 4*, 4**) thereof on the other hand; and
• the function that the vision processing network (2a) is to perform upon each use is controlled by an extra input to this vision processing network (2a).

12. The method (100) of any one of claims 1 to 11, wherein
• an input image (1) is chosen (105) that has been acquired by at least one sensor;
• an actuation signal (190a) is computed (190) from the segmentation (7); and
• a vehicle (50), a driving assistance system (51), a robot (60), a quality inspection system (70), a surveillance system (80), and/or a medical imaging system (90), is actuated (200) with the actuation signal (190a).

13. A computer program, comprising machine-readable instructions that, when executed by one or more computers and/or compute instances, cause the one or more computers and/or compute instances to perform the method (100) of any one of claims 1 to 12.

14. A non-transitory machine-readable storage medium, and/or a download product, with the computer program of claim 13.

15. One or more computers and/or compute instances with the computer program of claim 13, and/or with the non-transitory machine-readable storage medium and/or download product of claim 14.
